(19) Europäisches Patentamt
European Patent Office
Office européen des brevets

(11) **EP 3 379 713 A1**

(12) **EUROPEAN PATENT APPLICATION**
published in accordance with Art. 153(4) EPC

(43) Date of publication:
**26.09.2018 Bulletin 2018/39**

(51) Int Cl.:
**H02M 7/48** (2007.01)  **H02M 1/00** (2006.01)

(21) Application number: **15908765.9**

(22) Date of filing: **19.11.2015**

(86) International application number:
**PCT/JP2015/082493**

(87) International publication number:
**WO 2017/085825 (26.05.2017 Gazette 2017/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Hitachi, Ltd.**
**Chiyoda-ku**
**Tokyo 100-8280 (JP)**

(72) Inventor: **SAKANO Junichi**
**Tokyo 100-8280 (JP)**

(74) Representative: **Strehl Schübel-Hopf & Partner**
**Maximilianstrasse 54**
**80538 München (DE)**

(54) **POWER CONVERSION DEVICE AND VEHICLE CONTROL SYSTEM**

(57)    A power conversion device (1) is configured by connecting in series IGBTs (11, 12), IGBTs (13, 14), and IGBTs (15, 16) to both ends of a smoothing capacitor (C0) connected to a main power supply (Vs). The power conversion device (1) is provided with: a measuring unit (31) that measures the voltage of the main power supply (Vs), and the electromotive force of the parasitic inductance of a predetermined portion included in a main circuit between the smoothing capacitor (C0) and the IGBTs (11-16); and a determining unit (33) that performs determination by comparing, with a reference value, a value obtained by performing integrating operations over a predetermined period when one of the IGBTs (11-16) is operating, said integrating operations being performed on the basis of the voltage of the main power supply (Vs) and the electromotive force of the parasitic inductance. Consequently, even with the simple configuration, an abnormality and deterioration of a power semiconductor element and parts relating to the power semiconductor element can be highly accurately detected.

FIG. 1

EP 3 379 713 A1

**Description**

Technical Field

The present invention relates to a power conversion device and a vehicle control system using the same, particularly, which are configured by power semiconductor elements used for a large-capacity frequency conversion device for control of a motor for a railroad vehicle and a large-sized industry and a power system.

Background Art

In a power conversion device to be a large-capacity frequency conversion device for control of a motor for a railroad vehicle and a large-sized industry and a power system, power control of a high voltage and a large current is performed. If a failure occurs during an operation of the power conversion device, damage to a system or an unplanned system stop may occur, resulting in a large economic loss. For the purpose of preventing such a situation, it is necessary to detect deterioration or abnormality before destruction to prevent destruction by a function stop, notify a person concerned that there is a need for maintenance, and perform life extension control of the power conversion device to suppress deterioration.

For this reason, a method of measuring a current and a voltage applied to a power semiconductor, calculating a loss during a switching operation causing heat generation of the power semiconductor supplying or interrupting a current in a power converter, using a result thereof, and taking appropriate measures is suggested. Such an example is described in PTL 1. In a solution of an abstract of PTL 1, "a power conversion device (30) includes a correction circuit (38) for correcting a value of a drive signal (a2). If the drive signal (a2), a first signal (a8) according to an output voltage of a switching element (5), and a second signal (a9) according to an output current of the switching element (5) are input, the correction circuit (38) performs operation processing on a value of the first signal (a8) and a value of the second signal (a9) to obtain a switching loss. The correction circuit (38) compares the value of the switching loss with a first reference value and compares the value of the first signal (a8) with a second reference value. If at least one of the case where the value of the switching loss exceeds the first reference value and the case where the value of the first signal (a8) exceeds the second reference value is satisfied, the correction circuit (38) corrects a value of the drive signal such that the exceeding value becomes the corresponding reference value or less." is described. A method of performing an evaluation without using a special current sensor when the current of the power semiconductor is measured as described above is also suggested.

Citation List

Patent Literature

PTL 1: JP 2004-312817 A

Summary of Invention

Technical Problem

According to the invention described in PTL 1, it is considered that, by obtaining the loss during the operation and changing the drive control accordingly, the junction temperature of the power semiconductor can be suppressed to an allowable value or less and the risk of the failure can be reduced. However, from the viewpoint of preventing the failure, it is necessary to evaluate currents and voltages of all elements used in the power converter. For example, if a two-level three-phase inverter for driving a large-capacity motor in which a reliability requirement as a power conversion device is high is considered, according to the invention described in PTL 1, it is necessary to evaluate a large current of 1000 A class and a high voltage of several 1000 V class in power semiconductors of six places of upper and lower arms of U, V, and W phases. Because it is necessary to probe two points of the power semiconductors to measure the voltage, terminals and wiring lines of a total of 12 points for voltage probing are necessary. This causes a cost increase because consideration is necessary for insulation due to application of a high voltage and a configuration is complicated due to many parts.

In addition, for the evaluation of the large current in the power converter, it is necessary to insert sensors such as Rogowski coils and current transformers into six places. These sensors need to be inserted into a current path of a main circuit controlled by the power semiconductor to take large magnetic coupling. For this reason, applications of the sensors to existing devices are difficult, a wiring loop of the main circuit needs to be widened even when the sensors are inserted, and an influence on system performance such as an increase in the parasitic inductance of the main circuit cannot be ignored. In addition, it is considered that a price of the current sensor is high and an increase in the cost is also high.

Also, a method of obtaining a current by providing an inductance connected in series to the power semiconductor and an integrator integrating a voltage generated at both ends of the inductance is considered. However, in this case, because it is necessary to provide the inductance connected for each power semiconductor to evaluate the current and the integrator integrating the voltage generated at both ends of the inductance, six integrators to evaluate the current are required and it is difficult to install the integrators. In addition, because a potential of a circuit for evaluating the current changes at the time of switching, it is difficult to output an evaluation result of the current to the outside for diagnosis. For this reason, it is not realistic.

Accordingly, the present invention has been made to solve the above problems and an object thereof is to provide a power conversion device capable of detecting a failure or deterioration of power semiconductor elements and each part associated with the power semiconductor elements with high accuracy by a simple configuration and a vehicle control system using the same.

Solution to Problem

To solve the above problems, a power conversion device according to claim 1 is configured by serially connecting at least two power semiconductor elements to both ends of a smoothing capacitor connected to a main power supply. The power conversion device includes measurement means that measures a voltage of the main power supply and an electromotive voltage of an inductance of a predetermined portion included in a main circuit between the smoothing capacitor and the power semiconductor elements; and determination means that compares a value obtained by performing an integration operation over a predetermined period where one of the power semiconductor elements is operated, on the basis of the voltage of the main power supply and the electromotive voltage of the inductance, with a reference value and performs determination. Other means will be described in embodiments of the invention.

Advantageous Effects of Invention

According to the present invention, a power conversion device capable of detecting a failure or deterioration of power semiconductor elements and each part associated with the power semiconductor elements with high accuracy by a simple configuration and a vehicle control system using the same can be provided.

Brief Description of Drawings

[FIG. 1] FIG. 1 is a schematic configuration diagram showing a power conversion device according to this embodiment.
[FIG. 2] FIG. 2 a diagram showing a circuit operation of the power conversion device.
[FIG. 3] FIG. 3 is a waveform diagram of a measurement voltage and a measurement current at the time of turning-off.
[FIG. 4] FIG. 4 is a waveform diagram of a measurement voltage at the time of turning-off and a voltage calculated by an operation.
[FIG. 5] FIG. 5 is a waveform diagram of a measurement current at the time of turning-off and a current calculated by an operation.
[FIG. 6] FIG. 6 is a waveform diagram of a measurement voltage at the time of turning-on and a voltage calculated by an operation.
[FIG. 7] FIG. 7 is a waveform diagram of a measurement current at the time of turning-on and a current calculated by an operation.
[FIG. 8] FIG. 8 is a waveform diagram of a measurement voltage and a measurement current of the power conversion device under each temperature condition. [FIG. 9] FIG. 9 is a graph showing a relation of a temperature condition of the power conversion device and a voltage deviation.
[FIG. 10] FIG. 10 is a diagram showing a drive waveform of the power conversion device.
[FIG. 11] FIG. 11 is a diagram showing a mounting example of the power conversion device.
[FIG. 12] FIG. 12 is a configuration diagram showing a diagnosis circuit.
[FIG. 13] FIG. 13 is a flowchart illustrating diagnosis processing by the power conversion device.
[FIG. 14] FIG. 14 is a configuration diagram showing a vehicle control system in which the power conversion device according to this embodiment is mounted on a railroad vehicle.

Description of Embodiments

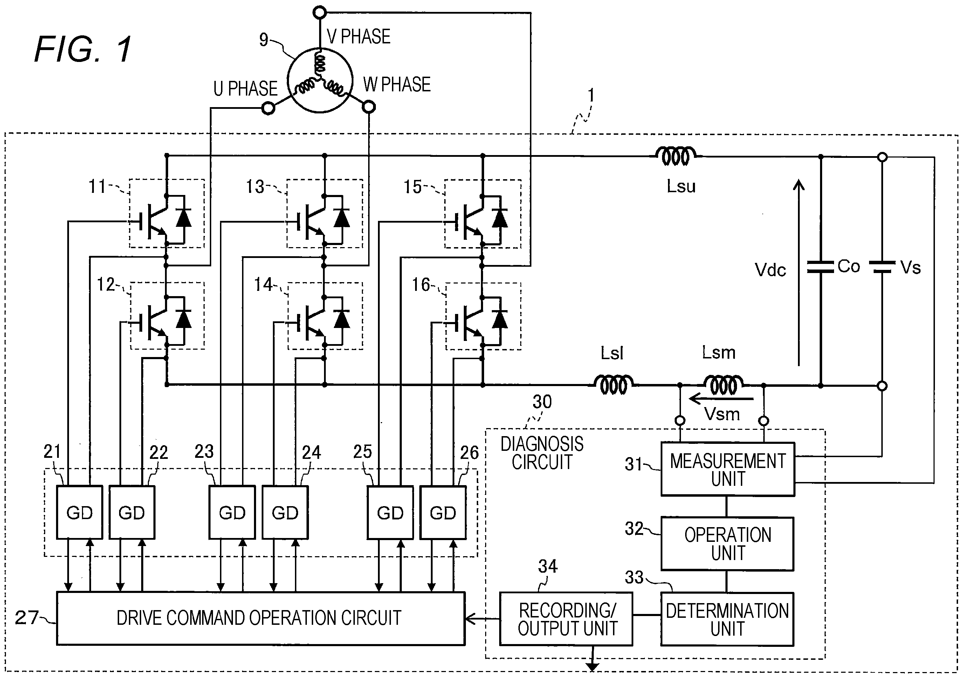

Hereinafter, embodiments of the present invention will be described in detail on the basis of the individual diagrams. FIG. 1 is a schematic configuration diagram showing a power conversion device 1 according to this embodiment. The power conversion device 1 is a two-level inverter that uses, as power semiconductor elements, IGBTs 11 to 16 to drive a three-phase motor 9 as a load. The power conversion device 1 is configured to include a drive command operation circuit 27, gate driver circuit units 21 to 26, IGBTs 11 to 16, a smoothing capacitor Co, and a diagnosis circuit 30.

The drive command operation circuit 27 generates a drive command and controls the IGBT 11 of an upper arm of a U phase and the IGBT 12 of a lower arm of the U phase to be the power semiconductor elements by the gate driver circuit units 21 and 22, respectively. Similarly, the drive command operation circuit 27 controls the IGBT 13 of an upper arm of a V phase and the IGBT 14 of a lower arm of the V phase by the gate driver circuit units 23 and 24, respectively, and controls conduction and interruption of the IGBT 15 of an upper arm of a W phase and the IGBT 16 of the lower arm of the W phase by the gate driver circuit units 25 and 26, respectively. As a result, the power conversion device 1 can drive the motor 9. In the power conversion device 1, the IGBTs 11 to 16 of the individual phases are connected to the smoothing capacitor $C_0$ connected to a main power supply by a main circuit wiring line including a parasitic inductance Lsu of the upper arm side of a bus bar and parasitic inductances Lsl and Lsm of the lower arm side of the bus bar. The smoothing capacitor $C_0$ is connected to a main power supply Vs for supplying DC power.

A total parasitic inductance Ls of the main circuit wiring line is also distributed in modules of the individual IGBTs 11 to 16 and the smoothing capacitor $C_0$ and parts thereof are the parasitic inductances Lsu, Lsl, and Lsm. In this example, although the parasitic inductance Lsm is a predetermined part of the bus bar closer to the smoothing capacitor $C_0$ in the lower arm, the parasitic inductance may be a parasitic inductance of other part as long as a current of each phase flows commonly.

A terminal for measuring a main power supply voltage Vdc and a terminal for measuring an electromotive voltage Vsm of the parasitic inductance Lsm are provided in the vicinity of the smoothing capacitor $C_0$. A measurement unit 31 of the diagnosis circuit 30 measures the main power supply voltage Vdc and the electromotive voltage Vsm in the parasitic inductance Lsm of the predetermined portion included in the main circuit between the smoothing capacitor $C_0$ and the individual IGBTs 11 to 16. An operation unit 32 calculates currents/voltages of the IGBTs 11 to 16 of the individual phases by an integration operation over a predetermined period in which one of the IGBTs 11 to 16 is operated, on the basis of values of the main power supply voltage Vdc and the electromotive voltage Vsm measured by the measurement unit 31, and calculates a loss. A determination unit 33 compares each result calculated by the operation unit 32 and each reference value set in advance and performs determination. A recording/output unit 34 records or outputs a result determined by the determination unit 33, outputs the result to the drive command operation circuit 27, and changes a drive command not to cause a failure in accordance with a situation. Here, by setting a reference of the terminal for measuring the voltage to a terminal capable of being set to a common potential with a ground of a main circuit power supply, a variation in the voltage measured by the measurement unit 31 is suppressed, reduction of a noise to a measurement voltage signal, reduction of an error of a signal output to the outside, and reduction of the number of high-voltage wiring lines for measurement are enabled, and diagnosis by the diagnosis circuit 30 becomes accurate highly.

Contents of changing a drive control command are, for example, to provide a limit value of a value of a maximum current at the time of conduction of the IGBTs 11 to 16 to reduce a loss at the time of conduction/interruption, to perform interruption to prevent a loss from occurring in the IGBTs 11 to 16, and to increase/decrease a time width of a conduction command of the IGBTs 11 to 16, thereby decreasing a value of a current flowing to IGBTs 11 to 16 and reducing the loss.

In this embodiment, losses of the IGBTs 11 to 16 can be calculated on the basis of a voltage value of the smoothing capacitor Co and the bus bar in the main power supply in which probing of the voltage is easy, without changing an existing system. The number of probing places of the voltage is also very small as two and it is possible to diagnose the presence or absence of abnormality or deterioration with a simple configuration.

Operation processing and diagnosis determination processing in this embodiment will be described below. When the IGBTs 11 to 16 of the individual phases perform a conduction/interruption operation, a current change rate dI/dt of a main current changes and an absolute value thereof increases. The drive command operation circuit 27 of the power conversion device 1 performs control such that simultaneous switching of a plurality of phases does not occur, in a normal operation. At this time, the electromotive voltage Vsm = Lsm·dI/dt is generated in the parasitic inductance Lsm. By integrating a right side of this formula in a period in which the electromotive voltage Vsm is generated, as shown in Formula (1), a current Icx flowing to the IGBTs 11 to 16 of the upper and lower arms of the U, V and W phases switched at this time can be calculated.

[Mathematical Formula 1]

$$I_{cx} = \int \frac{dI}{dt} \cdot dt = \int \frac{V_{sm}}{L_{em}} \cdot dt \quad \cdots (1)$$

In this case, a current flowing between the other phases that are not switched but are in a conduction state also flows simultaneously to the main circuit. However, as an examination result, it is found that an inductance $L_{load}$ of the load is sufficiently large with respect to the total inductance Ls of the main circuit and dI/dt = Vdc/Ls during switching without passing through the load is sufficiently large with respect to dI/dt = Vdc/$L_{load}$ in the case of conduction of a correlation flowing through the load. As an example, in the case of a motor for a railroad, $L_{load}$ is on the order of several mH, while Ls is on the order of about 100 nH, which is about 1/1000. For this reason, an electromotive voltage due to dI/dt at the time of conduction of other phase included in the electromotive voltage Vsm is sufficiently small and sufficient accuracy is obtained even if a phase current is obtained by Formula (1) .

Furthermore, at the time of switching, the main power supply voltage Vdc is shared by the electromotive voltage Vs = Ls·dI/dt generated by the parasitic inductance Ls of the main circuit and the elements of the upper and lower arms of the phase to be switched and is in a relation of Formula (2). Here, voltages $V_{cex1}$ and $V_{cex2}$ are collector-emitter voltages of the IGBTs of the upper and lower arms of each phase, respectively.
[Mathematical Formula 2]

$$V_{dc} = V_{cex1} + V_{cex2} + L_s \cdot \frac{dI}{dt} \quad \cdots (2)$$

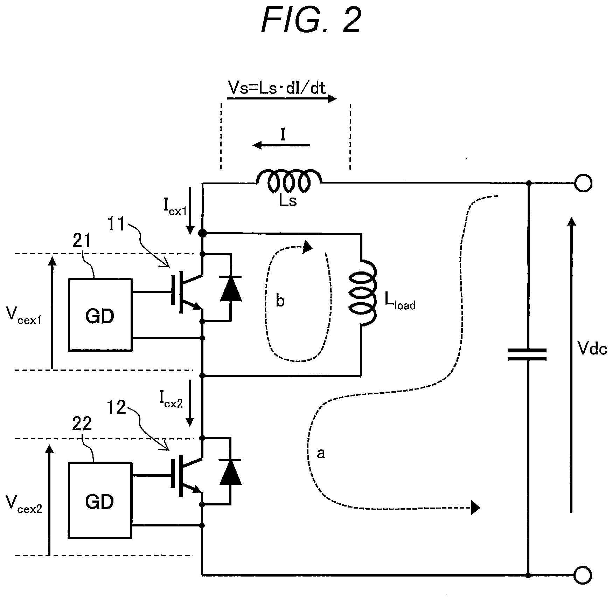

At this time, as an example, the case where a switching operation of turning-off for interrupting the current is generated in the lower arm is considered. FIG. 2 is a diagram showing a circuit operation of the power conversion device 1. A circuit operation for one phase in the main circuit of FIG. 1 is described in a simplified manner and a situation where the upper arm of other phase is turned on and the inductance $L_{load}$ of the motor 9 functioning as the load is connected to the upper arm side of the power supply voltage is shown. By the turning-off operation, a path of a current flowing to a lower arm element in a current path a in the drawing changes to a current path b. From Formula (2), the collector-emitter voltage $V_{cex2}$ of the lower arm is calculated by the following formula (3).
[Mathematical Formula 3]

$$V_{cex2} = V_{dc} - V_{cex1} - L_s \cdot \frac{dI}{dt} \quad \cdots (3)$$

In the case of the current path b (refer to FIG. 2) of diode reflux at the side of the IGBT 11 of the upper arm, the voltage $V_{cex2}$ is calculated by the following formula (4).
[Mathematical Formula 4]

$$V_{cex2} = V_{dc} - VF - L_s \cdot \frac{dI}{dt} \quad \cdots (4)$$

Here, a voltage VF is an on voltage of the IGBT in a diode reflux state. The voltage VF is changed by a current, a temperature, an operation mode, and a time. However, the voltage VF is several volts except for a forward recovery period to be an initial period at the time of turning off in the lower arm and a turning-on transition period of the diode. The voltage VF is sufficiently low as about 1/100 to 1/1000 as compared with the main power supply voltage Vdc and Formula (2) can be approximated like Formula (5).
[Mathematical Formula 5]

$$V_{cex2} = V_{dc} - V_{cex1} - L_s \cdot \frac{dI}{dt}$$

$$= V_{dc} + VF - L_s \cdot \frac{dI}{dt}$$

$$\fallingdotseq V_{dc} - L_s \cdot \frac{dI}{dt} \qquad \cdots (5)$$

At this time, if a ratio between the total inductance Ls and the parasitic inductance Lsm is obtained in advance, dI/dt = Vsm/Lsm is obtained from Vsm = Lsm·dI/dt. Therefore, from Formula (5), the voltage $V_{cex2}$ is given like Formula (6).
[Mathematical Formula 6]

$$V_{cex2} \fallingdotseq V_{dc} - L_s \cdot \frac{dI}{dt}$$

$$= V_{dc} - V_{sm} \cdot L_s \cdot \frac{L_s}{L_{sm}} \qquad \cdots (6)$$

From such an examination, it is found that the voltage $V_{cex2}$ of the lower arm element during the diode reflux period can be extracted by evaluating the main power supply voltage Vdc and the electromotive voltage Vsm of the parasitic inductance Lsm. It goes without saying that the signs of these formulas depend on the definition of the direction of the voltage or the current and when these are changed, the signs may be reversed.

In addition, as shown in Formula (7), the product of Vce in this period and the current $I_{cx1}$ obtained from Formula (1) is calculated and time integration is performed, so that a turning-off loss $E_{offx2}$ generated in that period can be calculated.
[Mathematical Formula 7]

$$E_{offx2} = \int V_{cex2} \cdot I_{cex2} \cdot dt$$

$$= \int \left( V_{dc} - V_{sm} \cdot \frac{L_s}{L_{sm}} \right) \cdot \left( \int \frac{V_{sm}}{L_{sm}} \cdot dt \right) \cdot dt \qquad \cdots (7)$$

$E_{offx2}$: energy loss at the time of turning off power semiconductor element
$V_{dc}$: voltage of main power supply
$V_{cex2}$: voltage applied to power semiconductor element
$I_{cex2}$: current flowing to power semiconductor element
$L_s$: value of total inductance
$L_{sm}$: value of inductance to be measured
$V_{sm}$: electromotive voltage of inductance to be measured

Here, an integration period is a diode reflux period.

Because the diode reflux period corresponds to that the diode of the paired arm is forward biased, that is, in this case, the voltage $V_{cex1}$ becomes negative, it corresponds to that the voltage $V_{cex2}$ exceeds the main power supply voltage Vdc and can be determined from a value of the electromotive voltage Vsm as can be seen from Formula (6).

Although detailed description is omitted, the above formula is realized at the time of turning-on switching when the power semiconductor element flows the current. Therefore, the main power supply voltage Vdc and the electromotive voltage Vsm are evaluated, so that the voltage Vce in the diode reflux period of the paired arm can be similarly calculated, and a switching loss of this period can be obtained. In this embodiment, when a loss of a certain period during switching obtained as described above is used, the loss is compared with a loss assumed during an operation of a power converter, and a difference with an assumed value is beyond a constant range, it is determined that deterioration or abnormality has occurred, and a result thereof is recorded or output and is provided for determination of maintenance, replacement, or the like, thereby preventing a failure during the operation.

Because currents and voltages of power semiconductors of all phases are obtained from the formulas (1) and (6) by this method, the presence or absence of abnormality can be diagnosed by comparison with feature amounts such as current and voltage waveform assumed during the operation and a delay time extracted from these using operation processing.

In addition, in the method according to the present invention, diagnosis of the power semiconductors of all the phases can be collectively performed. As a result of diagnosis, the maintenance is performed after confirming the abnormality and at that time, a specific abnormal portion is specified and repair, replacement, or the like is performed. When it is necessary to specify the arm in which the abnormality occurs to simplify the maintenance, the arm in which a signal of Vsm is generated can be specified by analysis using a specification of a drive pattern of a drive command operation or additional information such as a drive command signal.

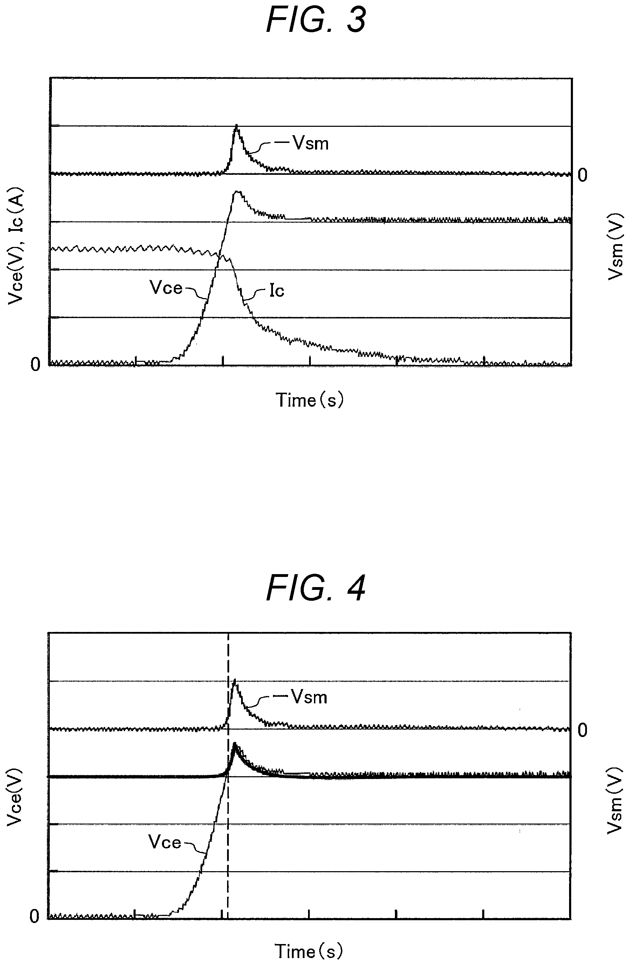

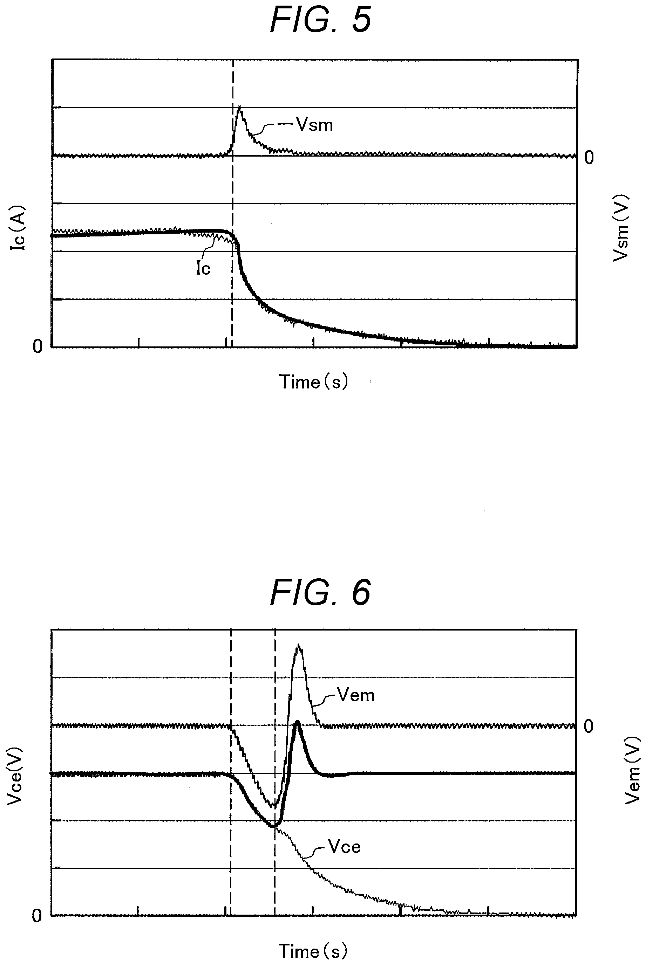

FIGS. 3 to 7 are waveform diagrams of a measurement voltage and a measurement current of the power conversion device 1. FIGS. 3 to 7 show a comparison between actually measured Vce and Ic turning-off waveforms of a two-level inverter main circuit by an IGBT of an L load simulating a power converter and waveforms extracted by the operation processing according to the method according to the present invention. FIG. 3 shows evaluation waveforms of the voltage Vce, the current Ic, and the electromotive voltage Vsm of the lower arm element by current and voltage probing. In FIG. 4, a calculation value of the voltage Vce obtained from these waveforms is shown by a solid line. In FIG. 5, a calculation value of the current Ic obtained from these waveforms is shown by a solid line. In this case, only the electromotive voltage Vsm is expressed by reversing the sign. A period of the right side of a vertical broken line in FIGS. 4 and 5 is a diode reflux period focused in this method. As shown in FIGS. 4 and 5, by using this method, the voltage Vce and the current Ic in this period can be reconfigured by an operation with high accuracy and extracted.

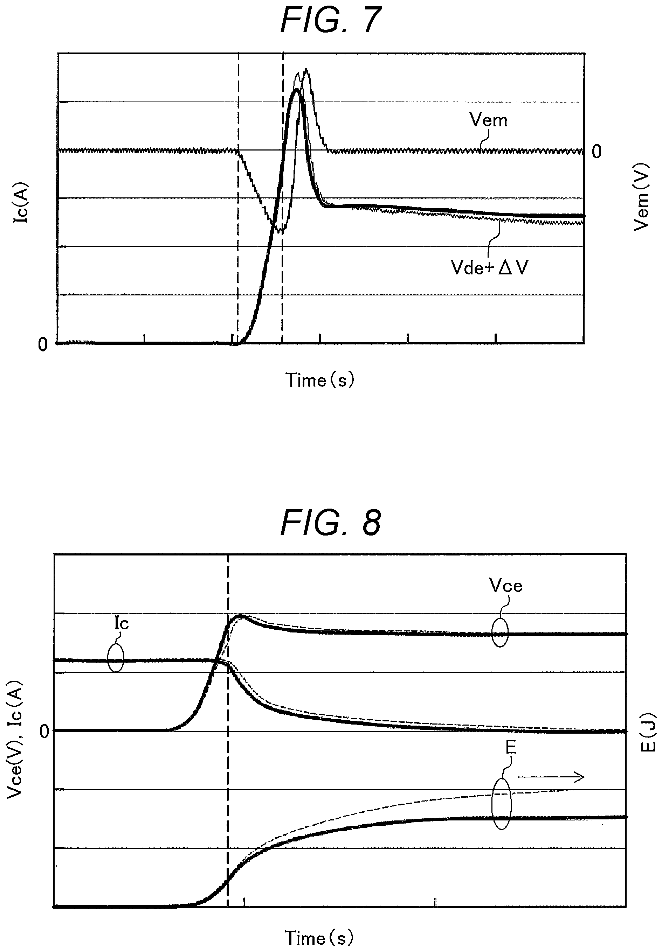

FIG. 6 shows an actually measured Vce turning-on waveform of the two-level inverter main circuit by the IGBT of the L load simulating the power converter and a calculation value of the voltage Vce obtained from this waveform. FIG. 7 shows an actually measured Ic turning-on waveform of the two-level inverter main circuit by the IGBT of the L load simulating the power converter and a calculation value of the current Ic obtained from this waveform. A period sandwiched between two vertical broken lines in FIGS. 6 and 7 is a diode reflux period focused in this method. As shown in FIGS. 6 and 7, by using this method, the voltage Vce and the current Ic in this period can be reconfigured by an operation with high accuracy and extracted.

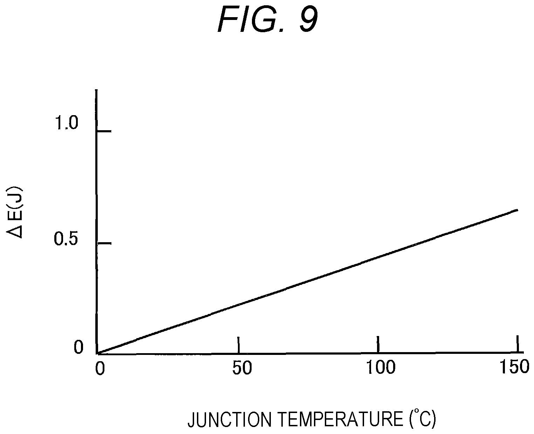

FIGS. 8 and 9 show embodiments in which a temperature of the power conversion device according to the present invention is diagnosed. FIG. 8 shows an example of a turning-off waveform in the two-level inverter main circuit by the IGBT of the L load and a switching loss E at that time. A solid line shows an example of a turning-off waveform in the case where the IGBT is at 25°C and a switching loss E at that time. A broken line shows an example of a turning-off waveform when the temperature of the IGBT is 125°C and a switching loss E at that time. In the switching loss E, a ratio of a portion generated in the diode reflux period focused in this method at the right side of a vertical dotted line in the drawings, calculated by this method, is large, the loss extractable by this method has a great influence on heat generation of the power semiconductor, and it is applicable to diagnosis.

Furthermore, although the switching loss E increases due to an increases in the temperature, the influence on the loss due to the temperature mainly occurs after the diode reflux period and the loss in this period is monitored by this method, so that it is possible to diagnose not only an increase in the loss due to deterioration or abnormality of driving of the elements but also an increase in the temperature caused by an increase in the thermal resistance of a cooling system for cooling the power semiconductor. FIG. 9 is a graph showing a relation between a junction temperature of the power semiconductor element and a change amount $\Delta E$ of the loss. Here, $\Delta E$ is set to 0 when the junction temperature is 0°C and a change amount of a loss when the junction temperature changes is shown. There is a correlation between the junction temperature and the change amount $\Delta E$ of the loss. Therefore, if the relation between the main power supply voltage Vdc and the current Ic is evaluated in advance, the junction temperature can be estimated from the loss evaluated by the operation processing in this embodiment, the main power supply voltage Vdc used at that time, and the current Ic obtained by the operation. As such, in this embodiment, the junction temperatures of the power semiconductors in all the arms of the power converter can be estimated from the evaluation of the main power supply voltage Vdc and the electromotive voltage Vsm.

In addition, a reference value of the junction temperature of the power semiconductor is determined by am ambient temperature of the power semiconductor element or a temperature of the cooling system. By comparing the reference value with an estimation value of the junction temperature of the power semiconductor, it can be determined whether or not the junction temperature of the power semiconductor deviates from an assumed temperature. Therefore, it is possible to improve detection of the deterioration or the abnormality of the power converter or determination accuracy of a degree of soundness.

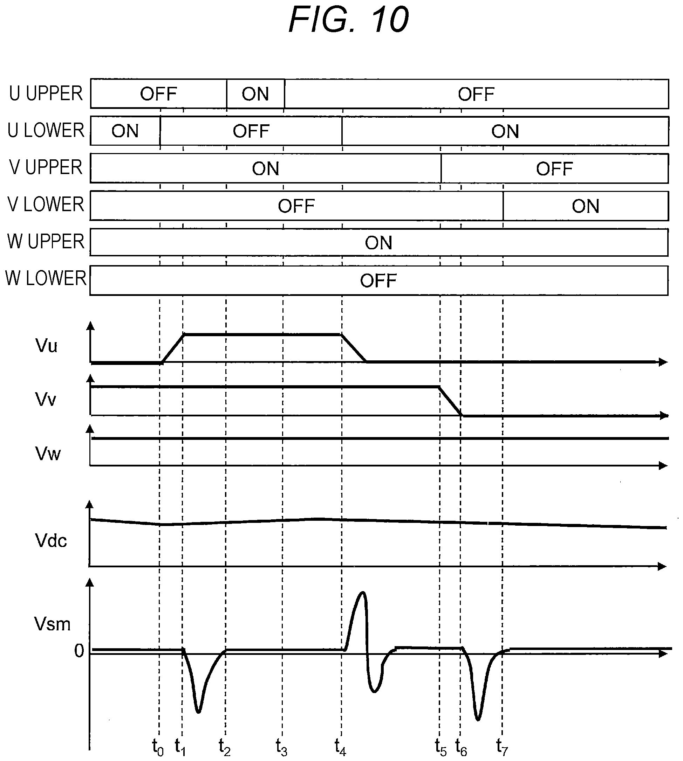

FIG. 10 is a diagram showing a drive waveform of the power conversion device 1. FIG. 10 shows an example of waveforms when a three-phase inverter is diagnosed. At an upper stage of FIG. 10, command signals of conduction and interruption of the upper and lower arms of the U, V, and W phases are shown. Below these, waveforms of output voltages Vu, Vv, and Vw of the U, V, and W phases, the main power supply voltage Vdc, and the electromotive voltage Vsm of the parasitic inductance Lsm are shown. Initially, the IGBT 12 of the lower arm of the U phase, the IGBT 13 of the upper arm of the V phase, and the IGBT 15 of the upper arm of the W phase are turned on.

At time t0, an interruption command signal is output to the IGBT 12 of the lower arm of the U phase during conduction and at time t1, the IGBT 12 is turned off and enters an interruption state. At time t2, the IGBT 11 of the upper arm of the U phase is turned on and enters a conduction state and at time t3, the IGBT 11 is turned off. Thereafter, at time t4, the IGBT 12 is turned on. At time t5, an interruption command signal is output to the IGBT 13 of the upper arm of the V phase during conduction and at time t6, the IGBT 13 is turned off and enters an interruption state. Thereafter, at time t7, the IGBT 14 of the lower arm of the V phase is turned on.

In this embodiment, the power semiconductor elements of all the phases of the inverter are collectively diagnosed from the voltage waveforms of the two points of the main power supply voltage Vdc and the electromotive voltage Vsm. However, as shown in the drawings, because a shape and a direction of the change of the waveform of the electromotive voltage Vsm are different in turning-on and turning-off, a switching mode can be specified from the waveform shape. In this embodiment, an on or off mode is determined in this manner and a determination reference value is selected from the mode, the current Icx obtained by calculation, the main power supply voltage Vdc, and the ambient temperature described above.

That the value of the electromotive voltage Vsm becomes positive slightly in a period other than the switching period is due to an influence of the electromotive voltage by the current flowing to the load, which is emphasized in the drawing. However, in an actual waveform, it is at a level that can be ignored with respect to the electromotive voltage Vsm during switching, as described above. In addition, the integration operation for calculating the current may be performed in a switching period in which the electromotive voltage Vsm changes. For example, at the time of turning-off, a period in which the electromotive voltage Vsm is a certain reference value or less is extracted from an evaluation waveform of the electromotive voltage Vsm and integrated in a time range thereof and an integration value is corrected such that a current at a point of time when the integration is completed becomes 0 A. In addition, at the time of turning-on, the integration may be started from a point of time when the electromotive voltage Vsm swings positively and performed in a period until a peak of the electromotive voltage Vsm and correction is performed such the current becomes 0 A at a point of time when the electromotive voltage Vsm first swings positively.

A period for integrating the loss is a diode reflux period of the paired arm. A period for integrating the loss in turning-off is after the vertical broken line shown in FIGS. 4 and 5 and the integration may be performed in a period in which the electromotive voltage Vsm becomes the certain reference value or less. A period for integrating the loss in turning-on is the section of the two vertical broken lines shown in FIGS. 6 and 7 and the integration may be performed in a period from a point of time when the electromotive voltage Vsm first swings positively to a point of time when the electromotive voltage Vsm reaches a positive peak. As such, because the integration period can be determined from the waveform of the electromotive voltage Vsm, the integration period can be determined by measurement of the electromotive voltage Vsm and a numerical operation thereof.

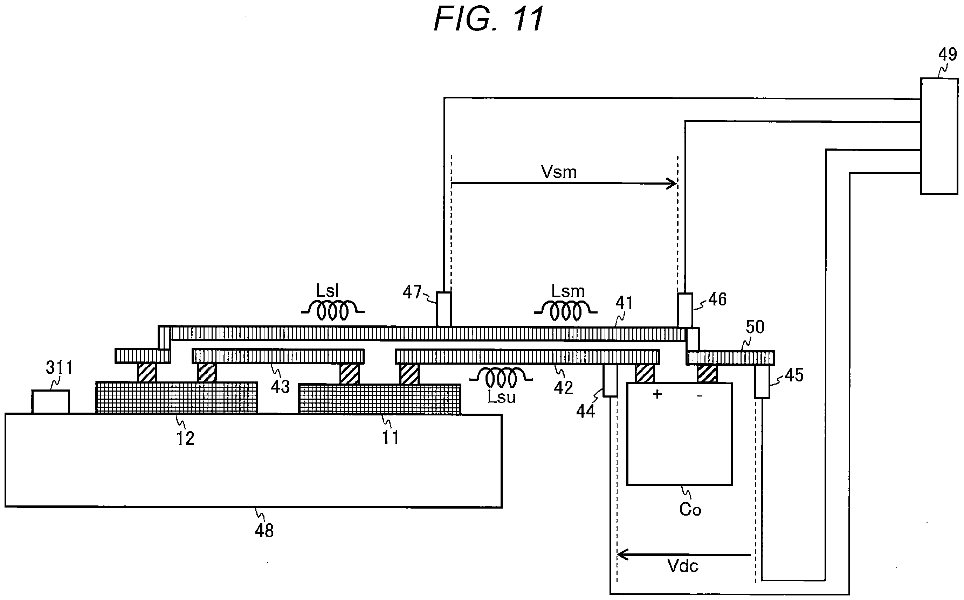

FIG. 11 is a diagram showing a mounting example of the power conversion device 1. A bus bar 41 of the negative potential side of the main circuit wiring line and a bus bar 42 of the positive potential side thereof are connected to the smoothing capacitor $C_0$ of the main power supply and the IGBTs 11 and 12 of the upper and lower arms are connected thereto. Power semiconductor modules of the upper and lower arms are electrically connected by a bus bar 43 and are thermally connected to a cooling unit 48. A temperature sensor 311 is provided for the purpose of evaluating the ambient temperature of the power converter in contact with the cooling unit 48. The bus bar 42 is provided with a terminal 44 for evaluating the main power supply voltage Vdc. A bus bar 50 is provided with a terminal 45 for evaluating the main power supply voltage Vdc. The bus bar 41 is provided with terminals 46 and 47 for evaluating the electromotive voltage Vsm. In this example, a reference point ground for voltage measurement is divided into the terminal 45 and the terminal 46, but the terminal 45 and the terminal 46 may be shared. The reference point ground for voltage measurement is set as one of the terminal 45 and the terminal 46 and voltages of the terminals 44 and 47 are measured, so that the device can be simplified. In addition, the value of the parasitic inductance Lsm can be adjusted by a position where the terminal 47 is provided. The portion of the parasitic inductance Lsm can be selected such that the value of the electromotive voltage Vsm does not become excessively small or large and is in an appropriate range suitable for diagnosis.

The voltage can be evaluated directly by the terminals 44 to 47. However, to increase a degree of freedom of mounting or diagnosis, it is effective to provide a connector 49 such that wiring lines are drawn from these terminals 44 to 47 and the voltage can be evaluated at other portion of the power converter or outside the power converter or provide a voltage division circuit to divide the main power supply voltage Vdc or the electromotive voltage Vsm by resistance in advance, extract the voltage by the wiring lines, and provide the connector 49. By using this configuration, even if the diagnosis circuit 30 is not always mounted in the power converter, when the operation time passes and the diagnosis of the device is necessary, it is possible to retrofit a diagnosis device in the device and perform diagnosis or connect the device to the diagnosis device outside the device and perform diagnosis, so that it becomes possible to perform necessary diagnosis without increasing a price of the device. In addition, when the voltage division circuit is provided, a voltage of a lead-out wiring line can be decreased and noise coupling can be reduced or reliability of insulation can be improved, so that it is particularly effective for the case where the device is connected to the diagnosis device outside the device and diagnosis is performed. In addition, it goes without saying that the terminals 44 to 47 may be provided with a circuit for voltage measurement, when various terminals for connection provided in an existing main circuit wiring line can be used.

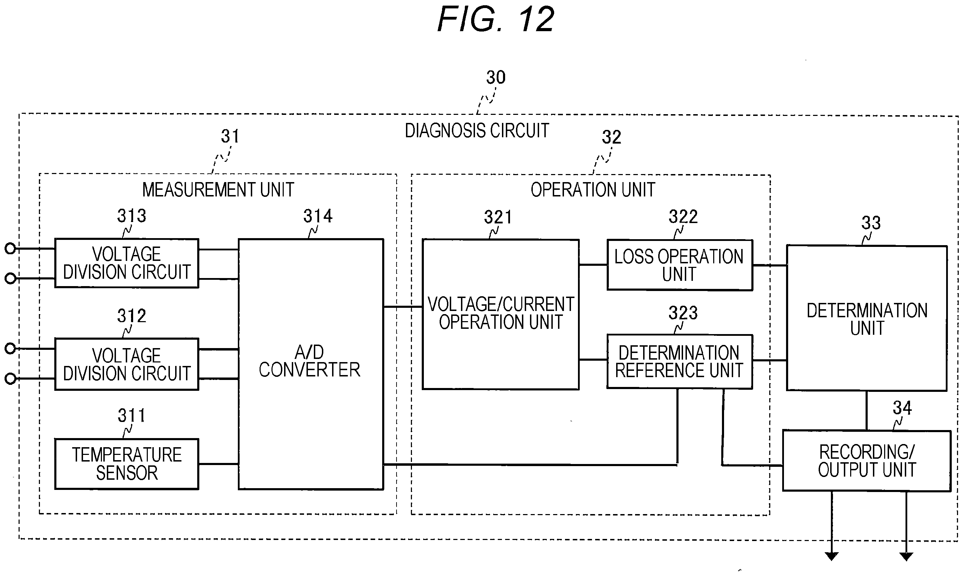

FIG. 12 is a configuration diagram showing the diagnosis circuit 30. In the diagnosis circuit 30, first, in the measurement unit 31, the voltage of the terminals 44 and 45 of the main power supply voltage Vdc is divided by a voltage division circuit 313 and the voltage of the terminals 46 and 47 of the electromotive voltage Vsm is divided by a voltage division circuit 312, the ambient temperature is detected by the temperature sensor 311, and these values are converted into digital values by an A/D conversion circuit 314. Next, the digitally converted values are input to the operation unit 32 and a voltage waveform and a current waveform are calculated by an operation by a voltage/current operation unit 321 using the method described above. From these values, a loss or a junction temperature is calculated by a loss operation unit 322. From the current and the voltage obtained in this manner and the ambient temperature evaluated by the sensor, an allowable value of the loss or the junction temperature under the corresponding condition or a value corresponding thereto is selected as a reference value by a determination reference unit 323. The determination unit 33 compares the calculated loss or junction temperature and the reference value thereof, determines processing according to an amount of deviation from the reference value, and records and outputs a result thereof by the recording/output unit 34.

In selecting the determination reference, a loss or a junction temperature in a previous operation state of the device or a value corresponding thereto is recorded in the recording/output unit 34 in advance and the value thereof is input to the determination reference unit 323 and can be used for setting the reference value. By doing this, an influence of a variation unique to the device can be suppressed and diagnosis can be performed with higher accuracy. In addition, a loss or a junction temperature under a specific condition is recorded in a constant period or a time when a change amount of the loss or the junction temperature increasing with time becomes a certain value is recorded, so that a time passage of deterioration of the conversion device can be quantified, and estimation of a maintenance time or estimation of a remaining life can be performed with high accuracy.

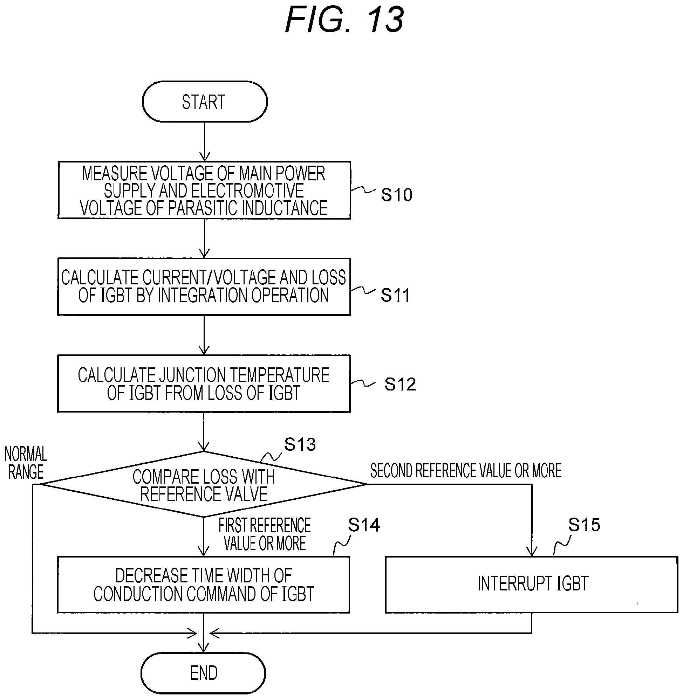

FIG. 13 is a flowchart illustrating diagnosis processing by the power conversion device 1. If diode reflux starts in any phase, processing of FIG. 12 starts. First, the measurement unit 31 measures the voltage of the main power supply and the electromotive voltage of the parasitic inductance (step S10). On the basis of the voltage of the main power supply and the electromotive voltage of the parasitic inductance, the operation unit 32 calculates the current/voltage and loss of the IGBT by the integration operation (step S11) and calculates the junction temperature of the IGBT from the loss of the IGBT (step S12).

Next, the determination unit 33 compares the loss of the IGBT and the reference value (step S13). If the loss of the IGBT is less than a first reference value and the loss is in a normal range, the processing of FIG. 12 ends. If the loss of the IGBT is the first reference value or more and less than a second reference value, a time width of a conduction command of the IGBT is decreased (step S14). As a result, performance of the power conversion device 1 is not impaired and the power conversion device can be operated over a long period while a failure is prevented. If the loss of the IGBT is the second reference value or more, the IGBT is interrupted (step S15). As a result, overheating of the IGBT can be prevented.

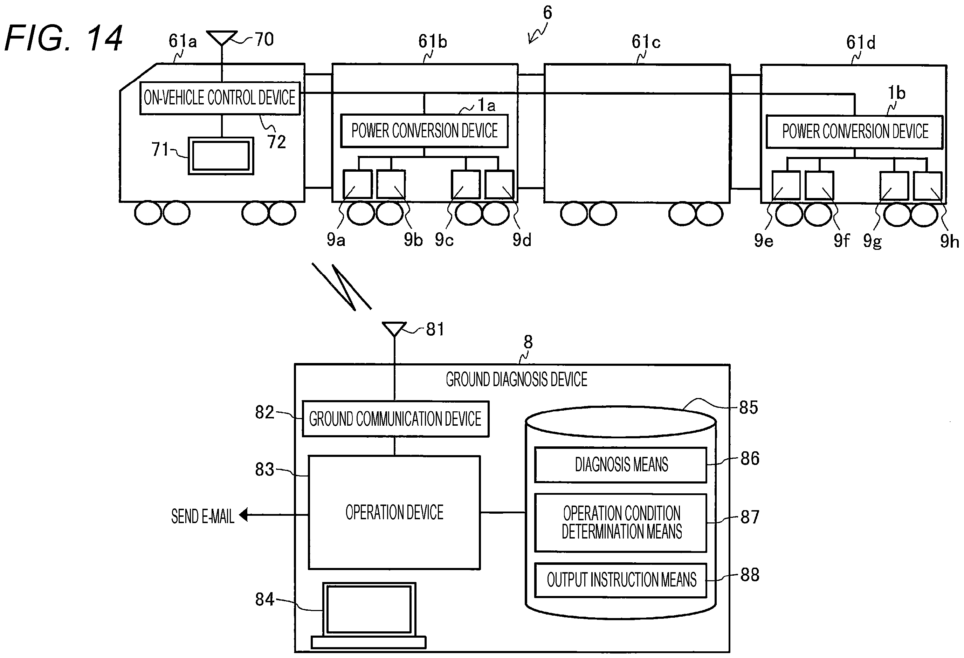

FIG. 14 is a configuration diagram showing a vehicle control system in which the power conversion device 1 according to this embodiment is mounted on a train 6. The train 6 includes a plurality of railroad vehicles 61a to 61d. An on-vehicle control device 72 and an on-vehicle antenna 70 and an on-vehicle display device 71 connected thereto are mounted on the railroad vehicle 61a. A power conversion device 1a and motors 9a to 9d driven by the power conversion device 1a are mounted on the railroad vehicle 61b. A power conversion device 1b and motors 9e to 9h driven by the power conversion device 1b are mounted on the railroad vehicle 61d. The power conversion devices 1a and 1b are controlled by on-vehicle communication means from the on-vehicle control device 72, the motors 9a to 9d are driven by an output of the power conversion device 1a, and the motors 9e to 9h are driven by an output of the power conversion device 1b. The on-vehicle control device 72 can communicate with a ground diagnosis device 8 outside the train 6 via the on-vehicle antenna 70. In addition, the on-vehicle display device 71 is connected to the on-vehicle control device 72 and can display a warning or an operation situation.

The ground diagnosis device 8 is provided with a ground antenna 81 and ground communication means 82 and is provided with an operation device 83, a display terminal 84, a storage device 85, diagnosis means 86, operation condition determination means 87, and output instruction means 88.

The on-vehicle control device 72 periodically transmits information corresponding to the loss or the junction temperature calculated by this method or a determination result based on a result thereof from the on-vehicle antenna 70 to the ground diagnosis device 8. The ground diagnosis device 8 stores the information in the storage device 85 via the ground antenna 81, the ground communication means 82, and the operation device 83, quantifies deterioration of the power conversion devices 1a and 1b by the diagnosis means 86 on the basis of the information, and determines operation conditions of the power conversion devices 1a and 1b and the train 6 as a whole from respective states of the power conversion devices 1a and 1b, by the operation condition determination means 87.

For example, the case in which a situation where the loss occurs excessively or the junction temperature becomes excessive in the power conversion device 1a occurs is considered. At this time, a life extension operation for reducing an output of the power conversion device 1a to prevent a failure is performed and operation control for performing diagnosis in the same way and increasing an output of the power conversion device 1b having a margin in the loss or the junction temperature to supplement an output of a shortage is performed. As a result, the performance of the railroad vehicles 61a to 61d is not impaired and the railroad vehicles can be operated over a long period while the failure is prevented. This diagnosis result is transmitted to the ground display terminal 84 or a related department as an e-mail via the output instruction means 88 and is reflected in a maintenance inspection schedule or a vehicle operation schedule according to a degree of occurred abnormality. This diagnosis result is further transmitted to the railroad vehicle side via communication means and when it is necessary to change the operation control, an operation condition is adjusted by the on-vehicle control device 72 on the basis of the information and reflected in an operation state. Here, as the timing and frequency of the communication, for example, it is considered that the ground diagnosis device 8 is installed in a vehicle base or the like to perform communication at the time of periodical maintenance inspections and the like and diagnosis and adjustment of operation conditions or maintenance as necessary are performed.

If portions of the storage device 85, the diagnosis means 86, and the operation condition determination means 87 of the ground diagnosis device 80 are not divided into individual vehicle bases, but are arranged in an integrated data center and information of the power conversion device 1 of a similar type can be collected, the number of objects to be diagnosed increases, so that it is also possible to increase accuracy of the determination reference value by a statistical method in addition to the method described above.

The method of performing diagnosis of the abnormality or the deterioration of the power conversion device 1 according to the present invention by evaluating the loss or the junction temperature without changing the system has been described using a large-capacity converter using IGBTs such as the railroad vehicles 60a to 60d as an example. It goes without saying that the power semiconductors are not limited to the IGBTs and the present invention can be applied to other power semiconductors including power MOSFETs and diodes and can also be applied to other power conversion systems. In addition, the method of diagnosing the loss or the abnormality of the temperature of the power semiconductor configuring the main circuit of the power conversion device 1 has been shown as an effect of the present invention. At the same time, deterioration or abnormality of other components including a logic unit of the power conversion device 1 can be detected by monitoring the loss or the temperature of the power semiconductor element. Examples of the abnormality include performance deterioration of a cooling device, signal deterioration of a communication circuit, malfunction of a logic circuit, drive waveform abnormality of a gate driver, and the like.

As described in detail above, according to the present invention, the means for measuring the voltage of the main power supply of the power conversion device 1 and the electromotive voltage of the inductance included in the main circuit which the main current flows to is provided and it is possible to provide the method in which the value obtained by operating the main power supply voltage and the electromotive voltage of the inductance is compared with the reference value for determination, the abnormality or the deterioration of the power semiconductor and the power conversion device related thereto is detected with high accuracy by a simple configuration, and a defect such as a failure can be prevented with high accuracy, thereby enabling long-term use without impairing the function as the system.

(Modification) The present invention is not limited to the embodiments described above and various modifications are included. For example, the embodiments are described in detail to facilitate the description of the present invention and the present invention is not limited to including all of the described configurations. In addition, a part of the configurations of the certain embodiment can be replaced by the configurations of other embodiments or the configurations of other embodiments can be added to the configurations of the certain embodiment. In addition, for a part of the configurations of the individual embodiments, addition/removal/replacement of other configurations can be performed.

A part or all of the individual configurations, functions, processing means, and processing mechanisms may be realized by hardware such as an integrated circuit, for example. The individual configurations and functions may be realized by software by analyzing programs for realizing the functions by a processor and executing the programs by the processor.

In the individual embodiments, only control lines or information lines necessary for explanation are illustrated and the control lines or information lines do not mean all control lines or information lines necessary for a product. In actuality, almost all configurations may be connected to each other.

Reference Signs List

1, 1a, 1b power conversion device

11 to 16 IGBT (power semiconductor element)
21 to 26 gate driver circuit unit
27 drive command operation circuit
30 diagnosis circuit
31 measurement unit
311 temperature sensor
312 voltage division circuit
313 voltage division circuit
314 A/D conversion circuit
32 operation unit
321 voltage/current operation unit
322 loss operation unit
323 determination reference unit
33 determination unit
34 recording/output unit
41 to 43 bus bar
44 to 47 terminal
48 cooling unit
49 connector
60 railroad vehicle
70 on-vehicle antenna
71 on-vehicle display device
72 on-vehicle control device
8 ground diagnosis device
81 ground antenna
82 ground communication means
83 operation device
84 display terminal
85 storage device
86 diagnosis means
87 operation condition determination means
88 output instruction means
9 motor

**Claims**

1. A power conversion device that is configured by serially connecting at least two power semiconductor elements to both ends of a smoothing capacitor connected to a main power supply, the power conversion device comprising:

   measurement means that measures a voltage of the main power supply and an electromotive voltage of an inductance of a predetermined portion included in a main circuit between the smoothing capacitor and the power semiconductor elements; and
   determination means that compares a value obtained by performing an integration operation over a predetermined period where one of the power semiconductor elements is operated, on the basis of the voltage of the main power supply and the electromotive voltage of the inductance, with a reference value and performs determination.

2. The power conversion device according to claim 1, further comprising:

   drive command means that generates a drive control command of each power semiconductor element,
   wherein the drive command means interrupts the power semiconductor element or increases/decreases a time width of a conduction command of the power semiconductor element and limits a maximum current value at the time of conduction, according to a determination result by the determination means.

3. The power conversion device according to claim 1, wherein the determination means calculates an energy loss of the power semiconductor element by the following formula (8), on the basis of the voltage of the main power supply, the electromotive voltage of the inductance of the predetermined portion included in the main circuit, and a total inductance of the main circuit.
[Mathematical Formula 8]

$$E = \int \left( V_{dc} - V_{sm} \cdot \frac{L_s}{L_{sm}} \right) \cdot \left( \int \frac{V_{sm}}{L_{sm}} \cdot dt \right) \cdot dt \quad \cdots (8)$$

E: energy loss of power semiconductor element
$V_{dc}$: voltage of main power supply
$V_{sm}$: electromotive voltage of inductance of predetermined portion
$L_s$: value of total inductance of main circuit
$L_{sm}$: value of inductance of predetermined portion

4. The power conversion device according to claim 3, wherein the determination means calculates a junction temperature of the power semiconductor element from the energy loss of the power semiconductor element, compares the junction temperature with a reference value, and performs determination.

5. The power conversion device according to claim 1, wherein the determination means performs the integration operation from a point of time when a voltage applied to the power semiconductor element exceeds the voltage of the main power supply, after turning off the power semiconductor element.

6. The power conversion device according to claim 1, wherein, when one of at least two power semiconductor elements connected in series performs a switching operation, the determination means performs the integration operation in a period where the other power semiconductor element connected in series to one power semiconductor element and making a pair performs a reflux operation.

7. The power conversion device according to claim 1, wherein the reference value is a value selected according to any one of the voltage of the main power supply, a value operated from the electromotive voltage of the inductance, and an internal temperature of the power conversion device or a value obtained by combining these values.

8. The power conversion device according to claim 1, wherein
a terminal to measure the voltage of the main power supply and a structure capable of connecting the terminal are provided,
a terminal to measure the electromotive voltage of the inductance of the predetermined portion included in the main circuit and a structure capable of connecting the terminal are provided, and
each terminal is electrically connected to a connector capable of connecting a circuit to measure a voltage or a value corresponding to the voltage.

9. The power conversion device according to claim 8, wherein the measurement means has a structure capable of being connected to or separated from the main circuit and when the determination means does not perform the determination, the measurement means is separated and operated.

10. A vehicle control system comprising:

the power conversion device according to any one of claims 1 to 9; and
communication means that outputs a determination result by the measurement means to the outside.

# FIG. 1

EP 3 379 713 A1

# FIG. 2

# FIG. 3

# FIG. 4

## FIG. 5

## FIG. 6

## FIG. 7

## FIG. 8

## FIG. 9

# FIG. 10

| U UPPER | OFF | ON | OFF | |
|---|---|---|---|---|
| U LOWER | ON | OFF | ON | |
| V UPPER | | ON | | OFF |
| V LOWER | | OFF | | ON |
| W UPPER | | ON | | |
| W LOWER | | OFF | | |

Vu

Vv

Vw

Vdc

Vsm

0

t₀  t₁  t₂  t₃  t₄  t₅ t₆  t₇

FIG. 11

*FIG. 12*

# FIG. 13

```
                    START

      MEASURE VOLTAGE OF MAIN POWER
      SUPPLY AND ELECTROMOTIVE          ~ S10
      VOLTAGE OF PARASITIC INDUCTANCE

      CALCULATE CURRENT/VOLTAGE AND LOSS  ~ S11
      OF IGBT BY INTEGRATION OPERATION

      CALCULATE JUNCTION TEMPERATURE       ~ S12
      OF IGBT FROM LOSS OF IGBT
```

S13

NORMAL RANGE

COMPARE LOSS WITH REFERENCE VALVE

SECOND REFERENCE VALUE OR MORE

FIRST REFERENCE VALUE OR MORE

S14

S15

```
  DECREASE TIME WIDTH OF
  CONDUCTION COMMAND OF IGBT        INTERRUPT IGBT
```

END

# FIG. 14

## INTERNATIONAL SEARCH REPORT

| International application No. |
| --- |
| PCT/JP2015/082493 |

A. CLASSIFICATION OF SUBJECT MATTER
*H02M7/48(2007.01)i, H02M1/00(2007.01)i*

According to International Patent Classification (IPC) or to both national classification and IPC

B. FIELDS SEARCHED

Minimum documentation searched (classification system followed by classification symbols)
H02M7/48, H02M1/00

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2003-224929 A (Mitsubishi Electric Corp.),<br>08 August 2003 (08.08.2003),<br>paragraphs [0019] to [0020]; fig. 2 to 3<br>(Family: none) | 1,5,7<br>2,10<br>3-4,6,8-9 |
| Y<br>A | JP 3-141719 A (The Japan Steel Works, Ltd.),<br>17 June 1991 (17.06.1991),<br>claim 1; fig. 1<br>(Family: none) | 2,10<br>3 |
| Y<br>A | JP 7-274486 A (Yaskawa Electric Corp.),<br>20 October 1995 (20.10.1995),<br>paragraph [0008]; fig. 1<br>(Family: none) | 2,10<br>3 |

| ☒ Further documents are listed in the continuation of Box C. | ☐ See patent family annex. |
| --- | --- |

*    Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    02 February 2016 (02.02.16) | Date of mailing of the international search report<br>    16 February 2016 (16.02.16) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2015/082493 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2014-110671 A (Toshiba Corp.), 12 June 2014 (12.06.2014), paragraphs [0008], [0012], [0021], [0023] to [0029]; fig. 1 to 2 & US 2014/0156135 A1 paragraphs [0020] to [0021], [0026], [0040], [0044] to [0053]; fig. 1 to 2 & WO 2014/083865 A1 | 10 |
| A | JP 2009-131024 A (Nissan Motor Co., Ltd.), 11 June 2009 (11.06.2009), paragraphs [0037] to [0038]; fig. 8 (Family: none) | 4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004312817 A